# FASCICULE DE BREVET EUROPEEN

(11) **EP 2 870 647 B1**
(45) Date de publication et mention de la délivrance du brevet: **09.03.2016**
(21) Numéro de dépôt: 13744624.1
(22) Date de dépôt: 25.06.2013
(51) Int. Cl.: H01M 4/66, H01M 10/052, H01M 10/0525, H01M 4/38, H01M 4/505, H01M 4/525, H01M 4/58

(54) **COLLECTEUR DE COURANT POUR BATTERIE LITHIUM**
STROMKOLLEKTOR FÜR EINE LITHIUMBATTERIE
CURRENT COLLECTOR FOR A LITHIUM BATTERY

(30) Priorité: 09.07.2012 FR 1256610
(43) Date de publication de la demande: 13.05.2015
(73) Titulaire: Commissariat à l'Énergie Atomique et aux Énergies Alternatives, 75015 Paris (FR)
(72) Inventeur: CHAMI, Marianne, F-38600 Fontaine (FR); JOUANNEAU-SI LARBI, Séverine, F-38590 Sillans (FR)
(74) Mandataire: Cabinet Laurent & Charras
(86) Numéro de dépôt international: PCT/FR2013/051479
(87) Numéro de publication internationale: WO 2014/009624

(56) Documents cités:
- WO-A1-2006/105187
- WO-A2-2006/105186
- US-A1- 2009 130 549
- US-A1- 2011 262 813
- SANCHEZ-CORONADO J ET AL: "Thermomechanical behavior of a graphite foam", CARBON, ELSEVIER, OXFORD, GB, vol. 41, no. 6, 1 janvier 2003 (2003-01-01), pages 1175-1180, XP004421903, ISSN: 0008-6223, DOI: 10.1016/S0008-6223(03)00025-3

## Description

### DOMAINE DE L'INVENTION

L'invention concerne un collecteur de courant pour batterie ou accumulateur, électrochimique au lithium. Ce collecteur de courant comprenant une mousse viscoélastique, assure également la fonction d'emballage de l'accumulateur.

### ETAT ANTERIEUR DE LA TECHNIQUE

Les accumulateurs électrochimiques au lithium fonctionnent sur le principe d'insertion ou de désinsertion (ou intercalation - désintercalation) de lithium sur au moins une électrode.

Ils comportent un coeur électrochimique anode/électrolyte/cathode qui peut être intégré dans une structure présentant une géométrie cylindrique, prismatique, ou empilée par exemple. Les deux électrodes comprennent chacune un collecteur de courant, et sont séparées par un séparateur pouvant se présenter sous forme solide ou polymérique (membrane).

De manière générale, le coeur de l'accumulateur est protégé des éléments extérieurs par un emballage rigide ou souple.

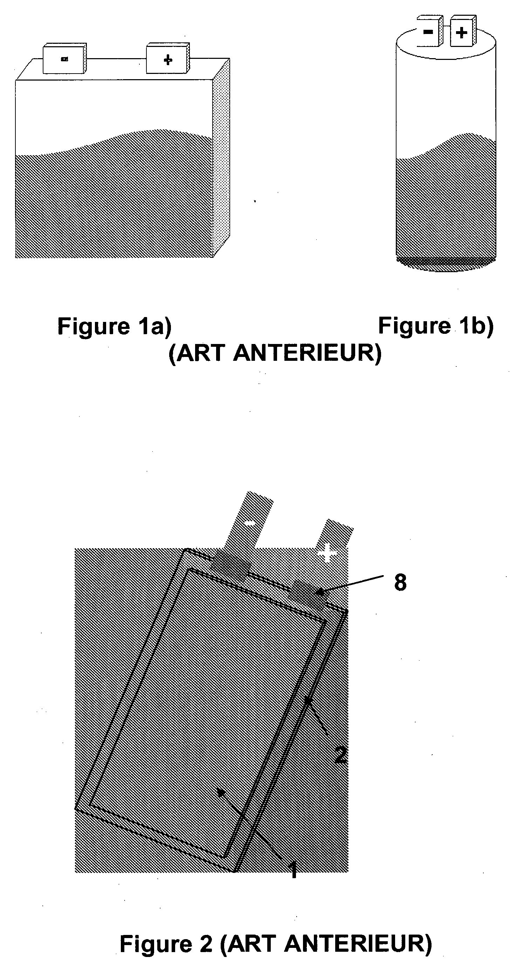

L'accumulateur peut ainsi être contenu dans un boitier métallique (figure 1), par exemple en aluminium. Ce type d'emballage est généralement conçu afin de répondre à différents types de contraintes : électriques (liées à la circulation du courant électrique) ; mécaniques ; thermiques ; ou sécuritaires (évents de sécurité sur le boîtier). De manière générale, le scellage du boitier est réalisé par soudure, par exemple par laser, ce qui lui confère des propriétés d'étanchéité au cours du temps. En outre, le fonctionnement de l'accumulateur est assuré par la présence de connections externes au boitier.

Bien que l'utilisation d'un boitier métallique procure de nombreux avantages, son poids affecte de manière non négligeable la densité d'énergie de l'accumulateur.

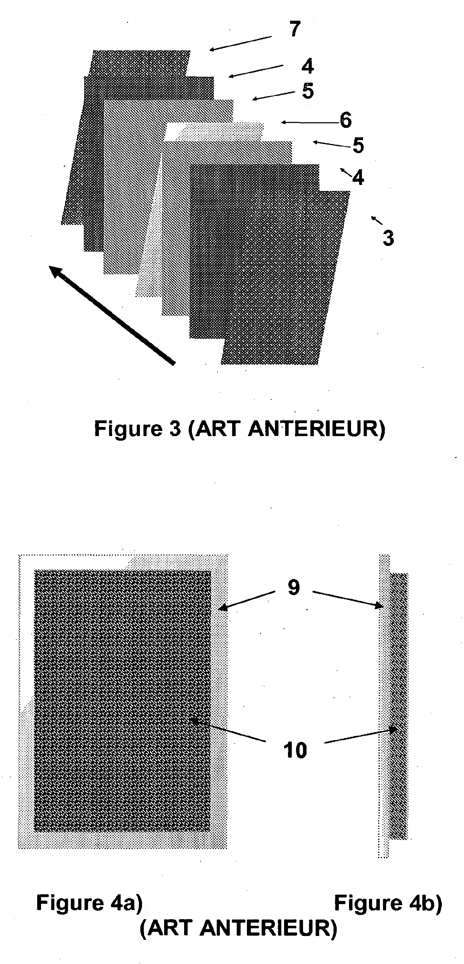

Afin de remédier à cette problématique, des boitiers souples ont été développés. Il s'agit généralement d'un film multicouche contenant un ou plusieurs films polymères laminés par collage à un fin feuillard central en aluminium (figures 2 et 3). Les connections électriques sont assurées au moyen de pattes collectrices de courant qui traversent l'emballage souple. Ce type d'emballage permet d'augmenter la densité d'énergie par rapport à une même cellule en boitier rigide. En outre, la couche interne d'un emballage souple, c'est-à-dire la couche en contact avec le coeur électrochimique, est isolante. Il s'agit généralement d'un polymère thermoscellable (polyoléfine), inerte vis-à-vis du coeur électrochimique, permettant ainsi d'isoler la cellule Li-ion vis-à-vis de l'atmosphère ambiante et du feuillard central en aluminium.

Un emballage souple permet donc de répondre aux exigences de densité d'énergie de l'accumulateur et de flexibilité. Toutefois, il a été observé que la tenue chimique du scellage d'une cellule dans un emballage souple de l'art antérieur se détériore au cours du temps.

En outre, bien que les deux types de boitiers disponibles, souple ou rigide, présentent chacun des avantages, la densité énergétique des accumulateurs reste à améliorer. En effet, chacun des constituants essentiels des accumulateurs a généralement une fonction unique, ce qui engendre une surcharge en poids. Par exemple, dans le cas d'une cellule conventionnelle en emballage souple ou rigide, les collecteurs de courant assurent la conduction des électrons des électrodes vers l'extérieur de la cellule, alors qu'un deuxième packaging est ajouté pour renforcer la tenue aux chocs et aux vibrations de la cellule.

Ainsi, dans le but d'améliorer la densité d'énergie des accumulateurs, des collecteurs de courant de cellule Li-ion sous forme de mousse métalliques (aluminium, nickel...) ont été décrits dans l'art antérieur. Ces matériaux permettent d'augmenter la surface active du collecteur de courant tout en allégeant le poids de la cellule.

S'agissant de la tenue aux chocs, l'introduction d'une mousse polymère entre les cellules unitaires d'un accumulateur a été décrite dans l'art antérieur. La mousse peut ainsi absorber le choc de plusieurs cellules.

Bien que ces solutions puissent paraître satisfaisantes lorsqu'elles sont considérées individuellement les unes des autres, il existe tout de même un besoin de limiter le poids des accumulateurs en général.

Le Demandeur a mis au point un composant trifonctionnel assurant à la fois :
- l'emballage de la cellule Li-ion c'est-à-dire son isolation vis-à-vis de l'atmosphère extérieure ;
- le rôle d'un collecteur de courant élastique ;
- la sécurité de la cellule Li-ion en termes de résistance aux chocs et aux vibrations.

Le document US2011/262813 divulgue un collecteur de courant pour accumulateur électrochimique au lithium comprenant une mousse viscoélastique conductrice associée à un film métallique conducteur électrique.

### EXPOSE DE L'INVENTION

Le Demandeur a mis au point un nouveau type de collecteur de courant permettant d'assurer également la fonction d'emballage souple. Dans une cellule électrochimique comprenant ce collecteur de courant, il apporte les propriétés suivantes :
- propriétés conductrices et élastiques de l'électrode supportée par ce collecteur de courant ;
- étanchéité de l'emballage de la cellule ;
- compressibilité réversible de l'électrode supportée par ce collecteur de courant.

Sont ainsi améliorées, non seulement les performances de la cellule mais aussi la sécurité de la cellule. En effet, les cellules Li-ion de l'art antérieur comprennent généralement des matériaux qui peuvent se déformer pendant le cyclage, et également entrainer la formation de gaz. L'élasticité du collecteur permet en outre d'améliorer intrinsèquement les performances en puissance et de conserver le contact intime de l'électrode au collecteur, notamment à des régimes élevées.

Plus précisément, la présente invention concerne un collecteur de courant pour accumulateur électrochimique au lithium comprenant une mousse viscoélastique électroniquement isolante et associée à un film polymérique conducteur électrique.

Par mousse viscoélastique, on entend un matériau polymérique sous forme de mousse, dont la déformation est réversible. Plus particulièrement, il s'agit d'une couche de matériau présentant une résilience (ou taux de résilience) d'au moins 5 %, avantageusement entre 5 et 100 %.

Les propriétés viscoélastiques de ladite mousse correspondent au temps de réponse du matériau (mousse) lorsqu'une pression est appliquée sur le matériau.

En outre, de manière avantageuse, la mousse présente une densité comprise entre 0,5 et 2, de préférence entre 1,3 et 1,7.

La mousse viscoélastique peut être préférentiellement choisie dans le groupe comprenant les mousses viscoélastiques qui sont déformables dans le domaine d'utilisation d'une cellule Li-ion, c'est-à-dire avantageusement entre -60°C et +100°C, plus avantageusement encore entre -20°C et + 40°C. Il peut notamment s'agir de mousses à base d'un matériau choisi dans le groupe comprenant le polyuréthane, les polyoléfine(s), le PVdF (polyfluorure de vinylidène), et leurs mélanges. La mousse viscoélastique peut donc être un polyuréthane, une polyoléfine, ou un PVdF par exemple.

De manière générale, les mousses susceptibles d'être utilisées dans le cadre de l'invention présentent un taux d'élasticité compris entre 5% et 100 %, avantageusement de l'ordre de 35% à 50%.

La mousse viscoélastique mise en oeuvre présente avantageusement les propriétés de résilience et/ou de densité, et/ou d'élasticité décrites ci-dessus à la température d'utilisation d'un accumulateur au lithium, c'est-à-dire avantageusement entre -60 °C et +100 °C, plus avantageusement encore entre -20 °C et + 40 °C.

Comme déjà dit, le collecteur de courant comprend également un film polymérique conducteur électrique. Ce dernier est couché sur au moins l'une des deux faces principales de la mousse viscoélastique. Le collecteur de courant de l'invention est donc un laminé comprenant une mousse, dont au moins une partie de l'une des deux faces principales est recouverte d'un film polymérique conducteur électrique.

Lorsque le collecteur de courant - objet de l'invention est utilisé dans une batterie ou accumulateur, le film polymérique est en contact avec l'électrode alors que la mousse viscoélastique, qui est électroniquement isolante, est exposée à l'environnement extérieur de la cellule.

De manière avantageuse, le film polymérique conducteur comprend des particules électriquement conductrices. Ces particules peuvent être dispersées dans un polymère ou dans une résine. En fonction des propriétés du polymère ou de la résine, le film peut être, de manière avantageuse, élastique.

L'élasticité du film polymérique conducteur électrique permet à ce dernier de subir des déformations. Par élasticité du film, on entend plus particulièrement une aptitude à se déformer de manière réversible, conformément à la mousse viscoélastique. Ainsi, le film polymérique peut présenter les mêmes propriétés de résilience que la mousse viscoélastique.

Les particules conductrices peuvent être dispersées de manière homogène dans tout le film polymérique. Elles peuvent également être concentrées à la surface du film polymérique. Le film polymérique permet la circulation des électrons entre les électrodes.

De manière générale, les particules conductrices peuvent être choisies dans le groupe comprenant notamment les particules métalliques telles que les particules de métal conducteur électrique (Cu, Al), les particules de carbone (noir de carbone), les nanotubes de carbone.

Ces particules, ou charges, conductrices peuvent représenter 5 à 80 % en poids du film polymérique. Comme déjà dit, ces particules sont avantageusement dispersées dans un polymère ou dans une résine.

Le polymère et la résine peuvent être conducteurs électriques. Dans ce cas, la présence de particules conductrices est optionnelle. Cependant, dans ce cas, ces matériaux présentent généralement une faible conductivité électrique qui engendre une forte résistance. Par conséquent, un mode de réalisation préféré de l'invention concerne un film comprenant des particules conductrices dispersées dans un polymère ou une résine n'étant pas conducteurs électriques.

Ainsi, de manière avantageuse, le film polymérique comprend une matrice thermoplastique (au moins un polymère ou une résine) et non conductrice.

Il peut notamment s'agir d'un polymère (ou résine thermoplastique) choisi dans le groupe comprenant les polyamides, les polycarbonates, les polyamide-imides, et les polyéther-imides.

En outre, le film peut comprendre au moins une, et avantageusement une, résine thermodurcissable pouvant être choisie dans le groupe comprenant les polyesters saturés ou insaturés, les vinylesters, les époxy, les polyuréthannes, les polyurées, les polyimides, et les bismaléimides. Ces résines permettent généralement d'obtenir un collecteur de courant plus rigide que dans le cas des matrices thermoplastiques.

La nature du film conducteur électrique peut ainsi permettre d'ajuster la flexibilité du collecteur de courant - objet de l'invention.

Selon un mode de réalisation particulier, le film polymérique peut également comprendre des charges organiques et/ou minérales. Ces charges permettent d'augmenter la rigidité du collecteur de courant au niveau de la surface en contact avec l'électrode, tout en maintenant les propriétés viscoélastiques de la mousse.

Les charges minérales peuvent être choisies dans le groupe comprenant les craies de carbonates ; les silices ; les talcs ; la wollastonite (surtout utilisée avec les polyamides) ; les argiles ; les alumino-silicates ; les oxydes et hydrates métalliques ; le verre (fibres coupées, poudre, billes creuses, microsphères) ; le carbone (noir de carbone, nanotubes de carbone, fibres de carbone), et leurs mélanges.

Il peut également s'agir de charges cellulosiques notamment lorsque le film comprend une résine thermodurcissable.

Selon un autre mode de réalisation particulier, l'électrode comprenant le collecteur de courant peut présenter des propriétés très rigides. Dans ce cas, le film polymérique peut comprendre :
- des résines époxy, polyuréthane, polyimide, acrylique ou styrènique présentant une température de transition vitreuse Tg telle que ces résines sont rigides à la température ambiante ;
- un renfort constitué de fibres longues ou de fibres courtes pouvant être choisies dans le groupe comprenant les fibres de verre, de carbone, de cellulose, de silice (ou de quartz), d'aramide, de bore, de polyéthylène de haut module, et les fibres naturelles (maïs, bananier, cocotier...). Ce renfort peut se présenter sous la forme d'un tissu de type unidirectionnel, toile, taffetas, serge, ou satin.

Toutefois, selon un mode de réalisation préféré, le film polymérique est constitué de particules conductrices dispersées dans un polymère ou une résine non conducteurs.

De manière avantageuse, et afin d'assurer son isolation électrique, la périphérie du film polymérique du collecteur de courant - objet de la présente invention comprend une zone électriquement non conductrice. En d'autres termes, le film polymérique comprend avantageusement une zone active c'est-à-dire une zone conductrice et une zone inactive c'est-à-dire isolante. La périphérie formant un cadre peut ainsi présenter une largeur comprise entre 1 mm et 1 cm.

Lorsque le film polymérique comprend des charges conductrices dispersées dans un polymère (ou une résine) conducteur électrique ou non, il peut s'agir d'une zone dépourvue de charges conductrices, en polymère (ou résine) électriquement non conducteur, et avantageusement thermoscellable. Dans ce cas, il peut s'agir d'une zone non active en polyoléfine par exemple.

En revanche, lorsque le film polymérique comprend des charges conductrices dispersées dans un polymère (ou une résine) électriquement non conducteur, il peut s'agir d'un cadre métallique entourant le film polymérique. Ce cadre est avantageusement en un métal conducteur électrique, préférentiellement choisi dans le groupe comprenant les aciers inoxydables, le titane et l'aluminium. Il peut être en aluminium dont le poids permet d'alléger l'accumulateur.

Selon ce mode de réalisation particulier, le cadre n'est pas en contact avec les particules conductrices.

En outre, le cadre métallique présente avantageusement une épaisseur au moins égale à 0,1 mm et inférieure à 20 mm. Il est ainsi possible de sceller le boitier, avantageusement par soudure laser continu ou pulsé.

Ainsi, la périphérie du film polymérique conducteur peut être en polymère thermoscellable ou métallique.

La présente invention concerne également un procédé de préparation du collecteur de courant décrit ci-dessus, par dépôt d'un film polymérique conducteur électrique sur une mousse viscoélastique, avantageusement par impression. L'association film/mousse peut également être assurée par laminage.

Le film polymérique et la mousse peuvent être associés par dépôt du film sur la mousse, soit par une technique d'impression (après avoir fondu le polymère pour le liquéfier), soit par laminage, de préférence à chaud, des couches de mousse et de film polymérique. La pression de laminage est ajustée de manière à ajuster l'épaisseur de la couche de polymère conducteur.

Le collecteur de courant selon l'invention présente une épaisseur avantageusement comprise entre 10 et 500 micromètres.

Le collecteur de courant - objet de l'invention peut être utilisé pour réaliser une électrode. Un matériau d'électrode est alors déposé sur la surface du collecteur de courant comprenant le film polymérique conducteur électrique, selon les techniques faisant partie des connaissances de l'homme du métier.

Selon un autre mode de réalisation de l'invention, le collecteur peut être utilisé pour la préparation d'une électrode biface comprenant deux électrodes positives ou négatives. Selon cette configuration, le collecteur comprend successivement un film conducteur électrique, une mousse, et un film conducteur électrique. Ainsi, chaque face principale du collecteur comprenant un film conducteur électrique peut être recouverte d'une électrode. Sur chacune de ses faces, le collecteur de courant selon l'invention est ainsi muni d'un matériau d'électrode, éventuellement associé à un conducteur électrique carboné, de type noir de carbone. Le matériau d'électrode peut être identique ou différent.

La présente invention concerne également une électrode et un accumulateur lithium comprenant au moins un collecteur de courant tel que décrit ci-avant.

Comme déjà indiqué, dans le cas d'une électrode biface, le matériau d'électrode de chacune des faces principales du collecteur peut être identique ou différent. L'électrode biface peut ainsi comprendre soit deux matériaux d'électrodes positives ou négatives, soit un matériau d'électrode positive et un matériau d'électrode négative. En d'autres termes, chacune des deux faces principales dudit collecteur comprend un matériau d'électrode positive ou un matériau d'électrode négative. L'électrode biface peut ainsi être bipolaire.

Le domaine de la présente invention concernant les batteries ou accumulateurs électrochimiques au lithium, l'homme du métier saura choisir les matériaux d'électrodes appropriés.

L'invention et les avantages qui en découlent ressortiront mieux des figures et exemples suivants donnés afin d'illustrer l'invention et non de manière limitative.

### DESCRIPTION DES FIGURES

Les figures 1a) et 1b) illustrent une cellule Li-ion dans un boîtier rigide selon l'art antérieur.
La figure 2 illustre une cellule Li-ion dans un emballage souple selon l'art antérieur.
La figure 3 représente un exemple de structure multicouche d'un emballage souple de l'art antérieur.
La figure 4 représente une électrode terminale conventionnelle pour cellule Li-ion, vue de dessus (figure 4a)) et vue de profil (figure 4b)).
La figure 5 représente une vue en perspective d'un premier mode de réalisation du collecteur de courant - objet de l'invention.
La figure 6 représente une vue en perspective d'un deuxième mode de réalisation du collecteur de courant objet de l'invention.
La figure 7 représente une électrode biface selon l'invention, vue de face (figure 7a)) et vue de profil (figure 7b)).
La figure 8 représente les étapes du procédé de fabrication d'une cellule selon un mode de réalisation de l'invention.

### DESCRIPTION DETAILLEE DE L'INVENTION

Les cellules Li-ion de l'art antérieur présentant un emballage souple (figure 2), sont généralement constituées d'un coeur de pile (1) enrobé d'un emballage souple multicouche (2). Le multicouche (2) est typiquement constituée de l'association, de l'intérieur vers l'extérieur de la pile (figure 3), des couches suivantes :
- une couche (3) de polyoléfine d'environ 50 micromètres d'épaisseur ;
- une couche (4) de colle ;
- une couche (5) dite de fondation ;
- un feuillard (6) en aluminium d'environ 40 micromètres d'épaisseur ;
- une couche (5) dite de fondation ;
- une couche (4) de colle ;
- une couche (7) de polymère d'environ 20 micromètres d'épaisseur.

En outre, dans ce type de piles, la connexion entre les électrodes et les pôles positif et négatif est généralement consolidée par un renfort polymère (8) (figure 2).

S'agissant des électrodes des cellules Li-ion de l'art antérieur, elles sont généralement constituées d'un collecteur de courant (9) métallique (aluminium), sur lequel est déposé le matériau d'électrode (10) (figure 4).

Par matériau d'électrode, on entend en particulier des matériaux à base de LiFePO₄, Li₄Ti₅O₁₂, NMC (lithium nickel manganèse cobalt oxyde), Graphite, Silicium, Etain, etc... De préférence, le matériau est du silicium.

Les piles de l'art antérieur comprennent donc un coeur électrochimique de type collecteur de courant/anode/séparateur/cathode/collecteur de courant dans un emballage multicouche.

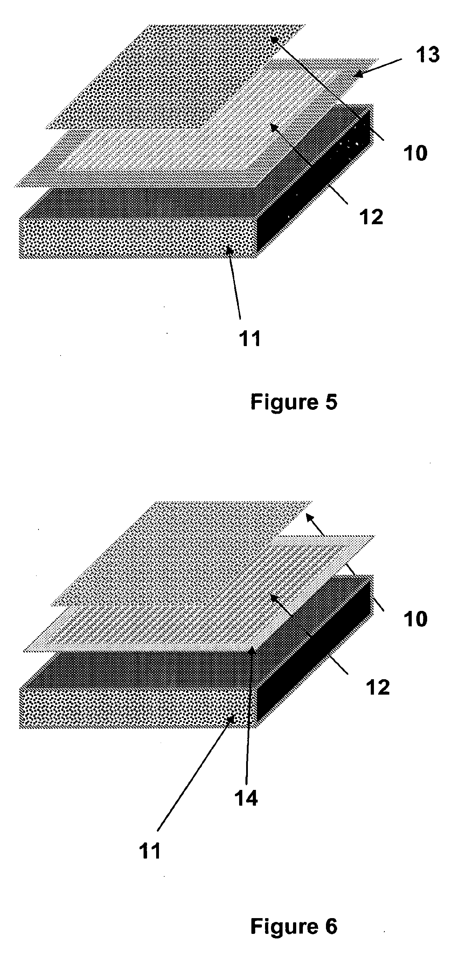

La figure 5 représente un mode de réalisation particulier du collecteur de courant selon l'invention. Il comprend une mousse viscoélastique (11) supportant un film (12) conducteur élastique comprenant des particules conductrices. Ce film peut être un mélange de métal conducteur et de résine conductrice ou non. Le film (12) peut être déposé sur la mousse (11) par impression.

Ce collecteur est associé à une électrode (10) à base de matériau actif d'électrode et éventuellement de noir de carbone. Le matériau actif et le noir de carbone peuvent être supportés par un polymère.

Dans ce collecteur, il est à noter que le film polymérique (12) comprend à sa périphérie, une résine ou un polymère thermoscellant et non conducteur (13). La périphérie, c'est-à-dire les bords extérieurs du collecteur ne sont donc pas conducteurs. Les propriétés du matériau (13) entourant le film (12) peuvent permettre un scellage à chaud de la cellule. Il peut s'agir d'une polyoléfine par exemple.

La figure 6 illustre un deuxième mode de réalisation particulier de l'invention selon lequel le film (12) est un mélange de métal conducteur et de résine non conductrice. Le film est entouré d'un cadre métallique (14).

Dans ce mode de réalisation, le cadre métallique (14) est en contact avec la résine non conductrice du film (12). Les propriétés de conducteur électrique du film (12) sont uniquement assurées par la présence de particules de métal conducteur. Le film (12), bien qu'il soit en contact avec le cadre métallique (14) l'entourant, n'est pas en contact électrique avec ledit cadre métallique en raison du caractère non conducteur de la résine. Les particules peuvent être concentrées de manière à être éloignées de la périphérie du film.

Le cadre métallique (14) permet de souder par laser la batterie, assurant ainsi l'étanchéité du dispositif. Il ne s'agit pas d'un feuillard métallique mais d'un cadre, dont les dimensions intérieures sont égales ou supérieures à la surface principale du film (12).

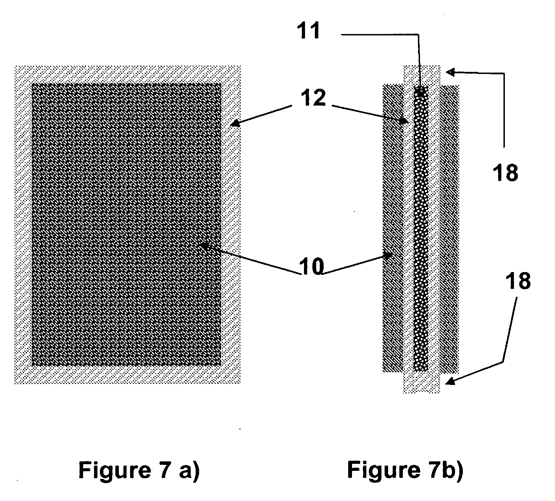

Selon un autre mode de réalisation particulier, le collecteur de courant objet de l'invention peut être utilisé pour réaliser une électrode biface (figure 7).

Dans ce cas, les deux faces principales de la mousse viscoélastique (11) sont recouvertes du film (12) (figure 7b)), le matériau d'électrode (10) étant déposé de part et d'autre du collecteur. En outre, en fonction de la nature du film polymérique (12), sa périphérie peut être en résine ou polymère thermoscellant non conducteur (13) ou en métal (14).

Selon une alternative le matériau d'électrode peut être différent de part et d'autre du collecteur pour former une électrode bipolaire.

Dans cette électrode biface, les bords supérieurs (18) du film polymérique (12) peuvent être métallisés afin de permettre la soudure électrique de plusieurs collecteurs de courant entre eux.

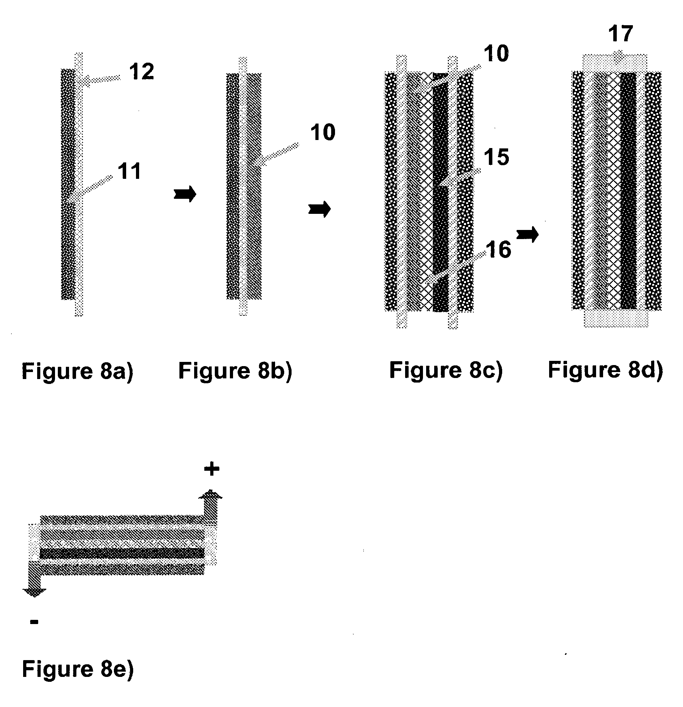

Les figures 8a) à 8e) illustrent les étapes de fabrication d'une cellule Li-ion comprenant le collecteur de courant selon l'invention.

La première étape concerne la formation du collecteur de courant par association de la mousse viscoélastique (11) et du film polymérique (12), pouvant notamment être thermoplastique (figure 8a)).

Il s'agit tout d'abord de découper la mousse viscoélastique (11) aux dimensions souhaitées, en fonction de celles de l'accumulateur.

Ensuite, un film polymérique (12), de préférence thermoplastique, est déposé sur la mousse, soit par une technique d'impression (après avoir fondu le polymère pour le liquéfier), soit par laminage à chaud des couches de mousse et de film polymérique. La pression de laminage est ajustée de manière à ajuster l'épaisseur de la couche de polymère conducteur.

En outre, il est à noter que le dépôt du polymère sur une mousse rugueuse peut engendrer une surface rugueuse. Le collecteur de courant pourra cependant être utilisé en l'état ou alors un deuxième passage permettra de lisser l'état de surface du collecteur pour combler les « trous ».

La deuxième étape (figure 8b)) consiste à déposer le matériau actif d'électrode (10) sur le film polymérique (12), notamment par impression d'une encre d'électrode par sérigraphie.

L'encre d'électrode (10) est généralement composée de la matière active, éventuellement de noir de carbone, et de polymère.

Selon les cas, le collecteur de courant, et plus particulièrement le film (12), peut présenter une surface lisse ou rugueuse. Lorsque la surface du film (12) est lisse, la capacité, ou grammage, de l'électrode peut être déterminée en mesurant l'épaisseur de l'encre enduite. En revanche, lorsque la surface du film (12) est rugueuse, la capacité de l'électrode peut être déterminée en pesant l'électrode

Ce procédé peut être mis en oeuvre pour la préparation d'électrodes positives (10) et négatives (15) mais également d'électrodes biface. En outre, l'emploi d'électrodes gélifiées est avantageux afin d'éviter d'optimiser le calandrage à chaud d'une électrode sur mousse.

La troisième étape (figure 8c)) concerne la réalisation du coeur électrochimique de la pile.

Le coeur électrochimique comprend successivement une électrode positive (10) face à une électrode négative (15), ces dernières étant séparées par un film microporeux isolant électrique (16) (le plus généralement en polyoléfine). Un film polymère gélifié (16) peut notamment être déposé par impression (sérigraphie par exemple).

La quatrième étape (figure 8d)) du procédé concerne le scellage de la cellule par thermoscellage au moyen notamment d'un polymère thermoplastique (17).

La fermeture de la cellule est, dans ce cas, réalisée par thermoscellage du polymère thermoplastique du film (12) interne à la cellule Li-ion, selon un cadre extérieur à la partie active. Le polymère (17) ajouté entre les deux feuilles de polymère conductrices n'est pas conducteur (pour éviter de mettre en court-circuit la cellule). Afin d'améliorer l'étanchéité de la cellule, il peut préférentiellement s'agir d'une polyoléfine

La cinquième étape (figure 8e)) concerne la mise en place des connections électriques entre les électrodes et l'extérieur de la cellule. Elles sont réalisées à partir d'une zone exposée au niveau de la partie externe de la mousse. Cette zone exposée peut être préférentiellement métallisée pour être soudée à un élément conducteur tel qu'un plot ou un fil.

## Revendications

1. Collecteur de courant pour accumulateur électrochimique au lithium constitué d'une mousse viscoélastique électroniquement isolante (11) et associée à un film polymérique conducteur électrique (12).

2. Collecteur de courant selon la revendication 1, ***caractérisé* en ce que** le film polymérique conducteur électrique comprend des particules électriquement conductrices.

3. Collecteur de courant selon l'une des revendications 1 et 2, ***caractérisé* en ce que** le film polymérique comprend des particules conductrices dispersées dans un polymère ou dans une résine.

4. Collecteur de courant selon la revendication 2, ***caractérisé* en ce que** les particules sont choisies dans le groupe comprenant le noir de carbone, des particules métalliques, les nanotubes de carbone.

5. Collecteur de courant selon la revendication 1, ***caractérisé* en ce que** le film polymérique comprend un polymère choisi dans le groupe comprenant les polyamides, les polycarbonates, les polyamide-imides, les polyéther-imides.

6. Collecteur de courant selon la revendication 1, ***caractérisé* en ce que** le film polymérique conducteur comprend une résine thermodurcissable choisie dans le groupe comprenant les polyesters saturés ou insaturés, les vinylesters, les époxys, les polyuréthannes, les polyurées, les polyimides, et les bismaléimides.

7. Collecteur de courant selon l'une des revendications 1 à 6, ***caractérisé* en ce que** la mousse viscoélastique est à base d'un matériau choisi dans le groupe comprenant les polyuréthanes, les polyoléfines, le polyfluorure de vinylidène, et leurs mélanges.

8. Collecteur de courant selon l'une des revendications 1 à 7, ***caractérisé* en ce que** le film polymérique comprend à sa périphérie une zone électriquement non conductrice.

9. Collecteur de courant selon l'une des revendications 1 à 8, ***caractérisé* en ce que** la mouse viscoélastique présente un taux de résilience compris entre 5 et 100 % à une température comprise entre -60 °C et +100 °C.

10. Collecteur de courant selon l'une des revendications 1 à 9, ***caractérisé* en ce que** la mouse viscoélastique présente une densité comprise entre 0,5 et 2 à une température comprise entre -60 °C et +100 °C.

11. Procédé de préparation du collecteur de courant selon l'une des revendications 1 à 10, selon lequel un film polymérique conducteur électrique est déposé sur une mousse viscoélastique.

12. Procédé de préparation du collecteur de courant selon la revendication 11, ***caractérisé*** en ce le film polymérique et la mousse sont associés par impression ou laminage.

13. Electrode comprenant le collecteur de courant selon l'une des revendications 1 à 10.

14. Electrode biface comprenant le collecteur de courant objet de l'une des revendications 1 à 10.

15. Accumulateur au lithium comprenant au moins un collecteur de courant selon l'une des revendications 1 à 10.

## Patentansprüche

1. Stromkollektor für einen elektrochemischen Lithiumakkumulator, gebildet aus einem viskoelastischen Schaumstoff (11), der elektronisch isolierend und mit einem elektrisch leitenden Polymerfilm (12) verbunden ist.

2. Stromkollektor nach Anspruch 1, **dadurch gekennzeichnet, dass** der elektrisch leitende Polymerfilm elektrisch leitende Partikel enthält.

3. Stromkollektor nach einem der Ansprüche 1 und 2, **dadurch gekennzeichnet, dass** der Polymerfilm leitende Partikel enthält, die in einem Polymer oder in einem Harz verteilt sind.

4. Stromkollektor nach Anspruch 2, **dadurch gekennzeichnet, dass** die Partikel aus der Gruppe ausgewählt sind, die Kohlenschwarz, Metallpartikel und Kohlenstoffnanoröhrchen umfasst.

5. Stromkollektor nach Anspruch 1, **dadurch gekennzeichnet, dass** der Polymerfilm ein Polymer enthält, das aus der Gruppe ausgewählt ist, die Polyamide, Polycarbonate, Polyamidimide und Polyetherimide umfasst.

6. Stromkollektor nach Anspruch 1, **dadurch gekennzeichnet, dass** der leitende Polymerfilm ein duroplastisches Harz enthält, das aus der Gruppe ausgewählt ist, die gesättigte oder ungesättigte Polyester, Vinylester, Epoxide, Polyurethane, Polyharnstoffe, Polyimide und Bismaleimide umfasst.

7. Stromkollektor nach einem der Ansprüche 1 bis 6, **dadurch gekennzeichnet, dass** der viskoelastische Schaumstoff auf Basis eines Materials ist, das aus der Gruppe ausgewählt ist, die Polyurethane, Polyolefine, Vinylidenpolyfluorid und deren Gemische umfasst.

8. Stromkollektor nach einem der Ansprüche 1 bis 7, **dadurch gekennzeichnet, dass** der Polymerfilm an seinem Umfang eine elektrisch nicht leitende Zone aufweist.

9. Stromkollektor nach einem der Ansprüche 1 bis 8, **dadurch gekennzeichnet, dass** der viskoelastische Schaumstoff bei einer Temperatur zwischen -60°C und +100°C einen Federkraftgrad zwischen 5 und 100% aufweist.

10. Stromkollektor nach einem der Ansprüche 1 bis 9, **dadurch gekennzeichnet, dass** der viskoelastische Schaumstoff bei einer Temperatur zwischen -60°C und +100°C eine Dichte zwischen 0,5 und 2 aufweist.

11. Verfahren zum Herstellen eines Stromkollektors nach einem der Ansprüche 1 bis 10, wobei ein elektrisch leitender Polymerfilm auf einem viskoelastischen Schaumstoff abgeschieden wird.

12. Verfahren zum Herstellen eines Stromkollektors nach Anspruch 11, **dadurch gekennzeichnet, dass** der Polymerfilm und der Schaumstoff durch Drucken oder Laminieren verbunden werden.

13. Elektrode, die den Stromkollektor nach einem der Ansprüche 1 bis 10 enthält.

14. Zweiseitige Elektrode, die den Stromkollektor enthält, der den Gegenstand eines der Ansprüche 1 bis 10 bildet.

15. Lithiumakkumulator, der mindestens einen Stromkollektor nach einem der Ansprüche 1 bis 10 enthält.

## Claims

1. A current collector for an electrochemical lithium accumulator consisting in an electronically-insulating viscoelastic foam (11) associated with an electroconductive polymer film (12).

2. The current collector of claim 1, wherein the electroconductive polymer film comprises electrically-conductive particles.

3. The current collector of any of claims 1 and 2, wherein the polymer film comprises conductive particles dispersed in a polymer or in a resin.

4. The current collector of claim 2, wherein the particles are selected from the group comprising carbon black, metal particles, carbon nanotubes.

5. The current collector of claim 1, wherein the polymer film comprises a polymer selected from the group comprising polyamides, polycarbonates, polyamide-imides, polyether-imides.

6. The current collector of claim 1, wherein the conductive polymer film comprises a thermosetting resin selected from the group comprising saturated or unsaturated polyesters, vinylesters, epoxies, polyurethanes, polyureas, polyimides, and bismaleimides.

7. The current collector of any of claims 1 to 6, wherein the viscoelastic foam is based on a material selected from the group comprising polyurethanes, polyolefins, polyvinylidene fluoride, and mixtures thereof.

8. The current collector of any of claims 1 to 7, wherein the polymer film comprises at its periphery a non-electroconductive area.

9. The current collector of any of claims 1 to 8, wherein the viscoelastic foam has a resilience rate in the range from 5 to 100% at a temperature in the range from-60°C to +100°C.

10. The current collector of any of claims 1 to 9, wherein the viscoelastic foam has a density in the range from 0.5 to 2 at a temperature in the range from -60°C to +100°C.

11. A method of preparing the current collector of any of claims 1 to 10, wherein an electrically-conductive polymer film is deposited on a viscoelastic foam.

12. The current collector preparation method of claim 11, wherein the polymer film and the foam are associated by printing or lamination.

13. An electrode comprising the current collector of any of claims 1 to 10.

14. A double-faced electrode comprising the current collector of any of claims 1 to 10.

15. A lithium accumulator comprising at least one current collector of any of claims 1 to 10.
